# EUROPEAN PATENT SPECIFICATION

(11) **EP 4 005 890 B1**
(45) Date of publication and mention of the grant of the patent: **15.11.2023**
(21) Application number: 20846310.9
(22) Date of filing: 22.07.2020
(51) Int. Cl.: B60W 50/023, B60R 16/02, G06F 11/18, G06F 11/16, G06F 11/20, G06F 11/07

(54) **VEHICLE CONTROL SYSTEM**
FAHRZEUGSTEUERUNGSSYSTEM
SYSTÈME DE COMMANDE DE VÉHICULE

(30) Priority: 30.07.2019 JP 2019140229
(43) Date of publication of application: 01.06.2022
(73) Proprietor: MAZDA MOTOR CORPORATION, Hiroshima 730-8670 (JP)
(72) Inventor: KUROKAWA, Yoshimasa, Aki-gun, Hiroshima 730-8670 (JP); YAMASHITA, Tetsuhiro, Aki-gun, Hiroshima 730-8670 (JP)
(74) Representative: Herrmann, Uwe
(86) International application number: PCT/JP2020/028489
(87) International publication number: WO 2021/020286

(56) References cited:
- WO-A1-2018/221136
- WO-A1-2019/055442
- JP-A- 2001 243 591
- JP-A- 2009 045 982
- JP-A- 2010 143 458
- JP-A- 2016 133 962
- JP-A- 2017 196 965
- US-B1- 6 853 887

## Description

### TECHNICAL FIELD

The invention disclosed here relates to a vehicle control system.

### BACKGROUND ART

Patent Document 1 describes a vehicle control system. This vehicle control system includes a sensor, a command controller for computing a manipulated variable command based on a signal from the sensor, and an actuator driving controller for controlling an actuator based on the manipulated variable command from the command controller. At least two of the sensors, the command controller, and the actuator driving controller include failure detectors for detecting failures thereof. Patent documents 2 and 3 disclose a vehicle control system wherein a plurality of control signals each show the same value.

### CITATION LIST

### PATENT DOCUMENT

Patent Document 1: Japanese Patent Application Publication No. 2016-196295
Patent Document 2: Japanese Patent Application Publication No. 2010-143458
Patent Document 3: International Patent application WO 2018/221136A1

### SUMMARY OF THE INVENTION

### TECHNICAL PROBLEM

The vehicle control system as described in Patent Document 1 may have a fail operational function by including a plurality of control systems in the command controller. With these control systems in the command controller, even when a failure occurs in one of the control systems, the other control systems can continue control of the actuator.

However, in a case where only one signal path is provided between the command controller and the actuator driving controller, when a communication error (e.g., blackout) occurs in this signal path, even if no failures occur in the control systems in the command controller, control of the actuator fails to continue. In this way, it is difficult to continue the fail operational function.

It is therefore an object of the invention disclosed here to enhance continuity of the fail operational function.

### SOLUTION TO THE PROBLEM

The invention disclosed here relates to a vehicle control system configured to control an actuator in a vehicle. The vehicle control system includes: a first controller; a second cont roller disposed on a signal path between the first controller and the actuator; and a plurality of signal lines connecting the first controller and the second controller to each other. The first co ntroller supplies a plurality of first control signals for controlling the actuator to the second co ntroller through the plurality of signal lines, performs an abnormality diagnosis of each of the plurality of first control signals. The second controller outputs a second control signal for con trolling the actuator based on the plurality of first control signals supplied from the first contro ller through the plurality of signal lines and diagnosis results of the plurality of first control si gnals obtained by the first controller. Each of the plurality of first control signals shows a targ et output of the actuator, and the target outputs shown by the plurality of first control signals a re different from one another in at least one of information used for deriving the target output and content of a deriving process of the target output.

In this configuration, the plurality of first control signals are supplied to the second controller from the first controller through the plurality of signal lines, and the second controller outputs a second control signal based on the plurality of first control signals and diagnosis results of the plurality of first control signals. Accordingly, even when abnormality occurs in one of the plurality of first control signals, the other first control signal(s) (first control signal(s) having no abnormality) can be supplied to the second controller, and thus, control of the actuator can be continued. In this manner, a fail operational function can be achieved.

In addition, since the plurality of first control signals are supplied from the first controller to the second controller through the plurality of signal lines, survivability to a communication error (e.g., blackout) between the first controller and the second controller can be enhanced, as compared to a case where one first control signal is supplied from the first controller to the second controller through one signal line. That is, a failure in continuing control of the actuator caused by a communication error between the first controller and the second controller is less likely to occur. As a result, continuity of the fail operational function can be enhanced.

In the vehicle control system, at least two of the plurality of signal lines may have different types of resistance.

In this configuration, since at least two of the plurality of signal lines have different types of resistance, survivability to a communication error between the first controller and the second controller can be enhanced, as compared to a case where all the plurality of signal lines have the same type of resistance. As a result, continuity of the fail operational function can be enhanced.

In the vehicle control system, at least two of the plurality of signal lines may be of different types.

In this configuration, since at least two of plurality of signal lines are of different types, the two signal lines are allowed to have different types of resistance. Accordingly, survivability to a communication error between the first controller and the second controller can be enhanced, as compared to a case where all the signal lines have the same type of resistance. As a result, continuity of the fail operational function can be enhanced.

In the vehicle control system, at least two of the plurality of signal lines may be separated from each other.

In this configuration, since at least two of the plurality of signal lines are separated from each other, the risk of occurrence of communication errors (e.g., blackout caused by disconnection) in all the signal lines by an external force (especially mechanical external force) can be reduced. As a result, continuity of the fail operational function can be enhanced.

### ADVANTAGES OF THE INVENTION

The invention disclosed here can enhance continuity of the fail operational function.

### BRIEF DESCRIPTION OF THE DRAWINGS

[FIG. 1] FIG. 1 is a block diagram illustrating an example configuration of a vehicle control system according to an embodiment.
[FIG. 2] FIG. 2 is a schematic view illustrating an example signal path in the vehicle control system.
[FIG. 3] FIG. 3 is a block diagram illustrating an example main portion of the vehicle control system.
[FIG. 4] FIG. 4 is a block diagram illustrating an example main portion of a vehicle control system of a comparative example beyond the scope of the claims.
[FIG. 5] FIG. 5 is a block diagram illustrating an example main portion of a vehicle control system according to a variation of the embodiment.
[FIG. 6] FIG. 6 is a view illustrating an example specific configuration of a controller.

### DESCRIPTION OF EMBODIMENTS

An embodiment will be specifically described hereinafter with reference to the drawings. In the drawings, the same or corresponding parts are denoted by the same reference characters, and description thereof will not be repeated.

### (EMBODIMENT)

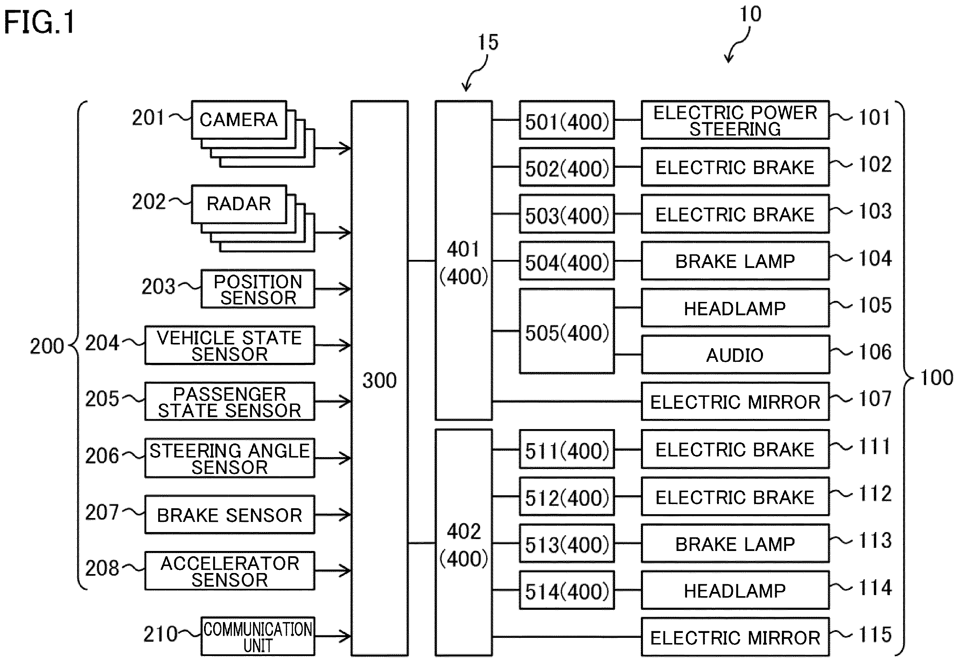

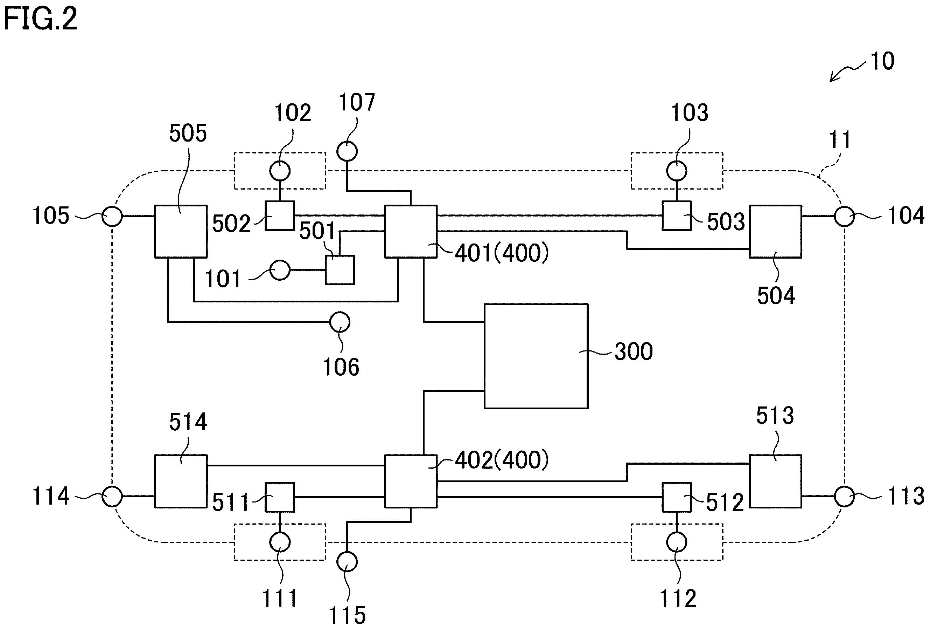

FIGS. 1 and 2 illustrate an example configuration of a vehicle control system 10. The vehicle control system 10 is installed in a vehicle 11 (specifically an automatic four-wheeled vehicle). The vehicle 11 is switchable among manual driving, assisted driving, and autonomous driving. The manual driving refers to driving in which the vehicle travels by driver's operation (e.g., operation of an accelerator). The assisted driving refers to driving in which the vehicle travels with assistance of driver's operation. The autonomous driving refers to driving in which the vehicle travels without driver's operation. The vehicle control system 10 controls operation of the vehicle 11 by controlling a plurality of actuators 100 in the vehicle 11 in the autonomous driving or the assisted driving.

In the vehicle 11, in driving control, braking control, and steering control, an X-by-wire technology for electrical control is employed. Specifically, an operation of an accelerator pedal, an operation of a brake pedal, and an operation of a steering wheel are detected by sensors described later, and the actuators 100 (i.e., actuators 100 concerning driving control, braking control, and steering control) are controlled in response to control signals generated based on outputs of the sensors so that driving control, braking control, and steering control are performed.

### [Actuator]

The actuators 100 individually actuate a plurality of vehicle-mounted devices (not shown) mounted on the vehicle 11. The actuators 100 include not only actuators 100 for actuating vehicle-mounted devices concerning basic operations of the vehicle 11 (e.g., driving, braking, and steering) but also actuators 100 for actuating vehicle-mounted devices not concerning basic operations of the vehicle 11 (so-called body-related devices). Examples of the vehicle-mounted devices include an engine, a transmission, an electric brake, an electric power steering, a brake lamp, a headlamp, an electric mirror, and an audio system. In the example illustrated in FIGS. 1 and 2, examples of the actuators 100 are an actuator 101 for an electric power steering device, actuators 102, 103, 111, and 112 for electric brakes, actuators 104 and 113 for brake lamps, actuators 105 and 114 for headlamps, and actuators 107 and 115 for electric mirrors.

### [Configuration of Vehicle Control System]

The vehicle control system 10 includes a plurality of sensors 200, a communication unit 210, and a computation device 15.

### [Sensors]

Each of the sensors 200 detects information for use in control of the actuators 100. In the example of FIG. 1, examples of the sensors 200 are a plurality of cameras 201, a plurality of radars 202, a position sensor 203, a vehicle state sensor 204, a passenger state sensor 205, a steering angle sensor 206, a brake sensor 207, and an accelerator sensor 208.

### <Camera (Imaging Section)>

The cameras 201 have similar configurations. The cameras 201 capture images of an external environment of the vehicle 11 to thereby acquire image data on the external environment of the vehicle 11. Image data acquired by the cameras 201 is transmitted to the computation device 15 (specifically a central controller 300, the same hereinafter). The cameras 201 are an example of an imaging section for taking images of an external environment of the vehicle 11.

In this example, the cameras 201 are monocular cameras having wide-angle lenses. The plurality of cameras 201 are disposed in the vehicle 11 such that an imaging area of the external environment of the vehicle 11 to be taken by the cameras 201 covers the entire surrounding of the vehicle 11. For example, the cameras 201 are constituted by solid-state image sensors such as charge coupled devices (CCD) or complementary metal-oxide-semiconductors (CMOS). The cameras 201 may be monocular cameras including normal lenses (e.g., narrow-angle lenses) or stereo cameras.

### <Radar (Detector)>

The radars 202 have similar configurations. The radars 202 detect an external environment of the vehicle 11. Specifically, the radars 202 transmits electric waves toward the external environment of the vehicle 11 and receive reflected waves from the eternal environment of the vehicle 11 to thereby detect the external environment of the vehicle 11. Detection results of radars 202 are transmitted to the computation device 15. The radars 202 are an example of a detector for detecting the external environment of the vehicle 11. The detector transmits detection waves toward the external environment of the vehicle 11 and receives reflected waves from the external environment of the vehicle 11 to thereby detect the external environment of the vehicle 11.

In this example, the plurality of radars 202 are arranged on the vehicle 11 such that a detection area of the external environment of the vehicle 11 to be taken by the radars 202 covers the entire surrounding of the vehicle 11. For example, the radars 202 may be millimeter-wave radars for transmitting millimeter waves, lidars (light detection and ranging) for transmitting and receiving laser light, infrared ray radars for transmitting and receiving infrared rays, or ultrasonic wave sensors for transmitting and receiving ultrasonic waves.

### <Position Sensor>

The position sensor 203 detects a position (e.g., latitude and longitude) of the vehicle 11. For example, the position sensor 203 receives GPS information from a global positioning system and detects the position of the vehicle 11 based on the GPS information. The position of the vehicle 11 detected by the position sensor 203 is transmitted to the computation device 15.

### <Vehicle State Sensor>

The vehicle state sensor 204 detects a state (e.g., speed, acceleration, and yaw rate) of the vehicle 11. For example, the vehicle state sensor 204 includes a vehicle speed sensor for detecting a speed of the vehicle 11, an acceleration sensor for detecting an acceleration of the vehicle 11, and a yaw rate sensor for detecting a yaw rate of the vehicle 11. The state of the vehicle 11 detected by the vehicle state sensor 204 is transmitted to the computation device 15.

### <Passenger State Sensor>

The passenger state sensor 205 detects a state of a passenger (e.g., physical condition, emotion, and physical behavior of a driver) on the vehicle 11. For example, the passenger state sensor 205 includes an in-vehicle camera for taking an image of the passenger and a biometric sensor for detecting biometric information of the passenger. The state of the passenger detected by the passenger state sensor 205 is transmitted to the computation device 15.

### <Driving Operation Sensor>

The steering angle sensor 206, the brake sensor 207, and the accelerator sensor 208 are examples of a driving operation sensor for detecting a driving operation to the vehicle 11. The steering angle sensor 206 detects a steering angle of a steering wheel of the vehicle 11. The brake sensor 207 detects a manipulated variable of a brake of the vehicle 11. The accelerator sensor 208 detects a manipulated variable of an accelerator of the vehicle 11. The driving operation detected by the driving operation sensor is transmitted to the computation device 15.

### [Communication Unit]

The communication unit 210 communicates with an external device disposed outside the vehicle 11. For example, the communication unit 210 receives, for example, communication information from other vehicles (not shown) located around the vehicle 11 and traffic information from a navigation system (not shown). The information received by the communication unit 210 is transmitted to the computation device 15.

### [Computation Device]

The computation device 15 controls operation of the actuators 100 based on, for example, outputs of the sensors 200 on the vehicle 11 and information from outside the vehicle. For example, the computation device 15 determines a target path that is a path on which the vehicle 11 is to travel, determines a target motion that is a motion of the vehicle 11 necessary for traveling on the target route, and controls operation of the actuators 100 such that motion of the vehicle 11 is the target motion.

Specifically, the computation device 15 includes the central controller 300, and a plurality of zone controllers 400. In this example, the computation device 15 includes one central controller 300, two zone controllers 401 and 402, and nine zone controllers 501 through 505 and 511 through 514. Each of the central controller 300 and the zone controllers 400 is constituted by an electronic control unit (ECU) including, for example, one or more processors, and one or more memories for storing programs and data for operating the one or more processors.

### <Connection between Central Controller and Zone Controller>

In the example of FIGS. 1 and 2, the two zone controllers 401 and 402 are connected to the central controller 300. As illustrated in FIG. 2, the zone controller 401 is disposed in a center portion of the right side of the vehicle 11, and the zone controller 402 is disposed in a center portion of the left side of the vehicle 11. Five zone controllers 501 through 505 and the actuator 107 of the electric mirror are connected to the zone controller 401. The five actuators 101 through 105 are respectively connected to the five zone controllers 501 through 505. Four zone controllers 511 through 514 and the actuator 115 of the electric mirror are connected to the zone controller 402. The four actuators 111 through 114 are respectively connected to the four zone controllers 511 through 514.

In the example of FIGS. 1 and 2, signal lines connecting the central controller 300 to the zone controllers 400 and a signal line connecting two zone controllers 400 are communication cables of Ethernet (registered trademark), and signal lines connecting the central controller 300 to the actuators 100 and signal lines connecting the zone controllers 400 to the actuators 100 are communication cables of controller area network (CAN). Each of the zone controllers 501 through 505 and 511 through 514 has the function of performing protocol conversion between Ethernet (registered trademark) and CAN.

### <Central Controller (First Controller)>

The central controller 300 receives outputs of the sensors 200 on the vehicle 11 and information from the outside of the vehicle and generates a plurality of control signals for controlling the actuators 100. The central controller 300 outputs a plurality of control signals. The central controller 300 is an example of a first controller.

For example, in assisted driving, the central controller 300 recognizes an external environment of the vehicle 11 based on outputs of the cameras 201 and the radars 202, and generates one or more candidate routes based on the recognized external environment of the vehicle 11. The candidate routes are routes on which the vehicle 11 is allowed to travel, and candidates of a target route.

The central controller 300 recognizes a behavior (e.g., speed, acceleration, and yaw rate) of the vehicle 11 based on an output of the vehicle state sensor 204. For example, the central controller 300 recognizes a behavior of the vehicle 11 from the output of the vehicle state sensor 204 using a leaning model generated by deep learning.

The central controller 300 recognizes a behavior of a passenger (e.g., physical condition, emotion, and physical behavior of a driver) based on an output of the passenger state sensor 205. For example, the central controller 300 recognizes a behavior of a passenger (especially a driver) from an output of the passenger state sensor 205 using a leaning model generated by deep learning.

The central controller 300 recognizes a driving operation applied to the vehicle 11 based on outputs of the steering angle sensor 206, the brake sensor 207, and the accelerator sensor 208.

Next, the central controller 300 selects a candidate route to be a target route from the one or more candidate routes generated as described above, based on the recognized behavior of the vehicle 11 and the driving operation applied to the vehicle 11. For example, the central controller 300 selects a candidate route for which the driver feels most comfortable from the plurality of candidate routes. Then, the central controller 300 determines a target motion based on the candidate route selected as the target route.

Thereafter, based on the target motion determined as described above, the central controller 300 generates a control signal for achieving the target motion. For example, the central controller 300 derives a target driving force, a target braking force, and a target steering amount that are a driving force, a braking force, and a steering amount for achieving a target motion. The central controller 300 generates a driving control signal showing a target driving force, a braking control signal showing a target braking force, and a steering control signal showing a target steering amount. The central controller 300 outputs a control signal.

### <Zone Controller (Second Controller)>

Each of the plurality of zone controllers 400 is provided in a predetermined zone of the vehicle 11. Each of the zone controllers 400 is disposed on a signal path between the central controller 300 and a corresponding one of the actuators 100. Specifically, one or more zone controllers 400 are provided on signal paths between the central controller 300 and one of the actuators 100. For example, in the example of FIGS. 1 and 2, two zone controllers 401 and 501 are provided on a signal path between the central controller 300 and the actuator 101 of the electric power steering. Each of the zone controllers 400 relays a signal. With this configuration, a control signal output from the central controller 300 is supplied to the actuator 100 by way of one or more zone controllers 400 so that operation of the actuator 100 is controlled.

For example, the zone controllers 400 (not shown) disposed on signal paths between the central controller 300 and actuators (not shown) of the engine and the transmission relay control signals output from the central controller 300 to the actuators of the engine and the transmission. The actuators of the engine and the transmission actuate the engine and the transmission based on a target driving force shown by a driving control signal. Accordingly, a driving force of the vehicle 11 is controlled to be a target driving force.

The zone controllers 401 and 502 disposed on a signal path between the central controller 300 and the actuator 102 of the electric brake relay a braking control signal output from the central controller 300 to the actuator 102. The actuator 102 actuates the electric brake based on a target braking force shown by the braking control signal. Accordingly, the braking force of the electric brake is controlled to be a target braking force.

The zone controllers 401 and 501 disposed on a signal path between the central controller 300 and the actuator 101 of the electric power steering relay a steering control signal output from the central controller 300 to the actuator 101. The actuator 101 actuates an electric power steering based on a target steering amount shown by the steering control signal. Accordingly, the steering amount of the vehicle 11 is controlled to be a target steering amount.

### [Details of Central Controller and Zone Controller]

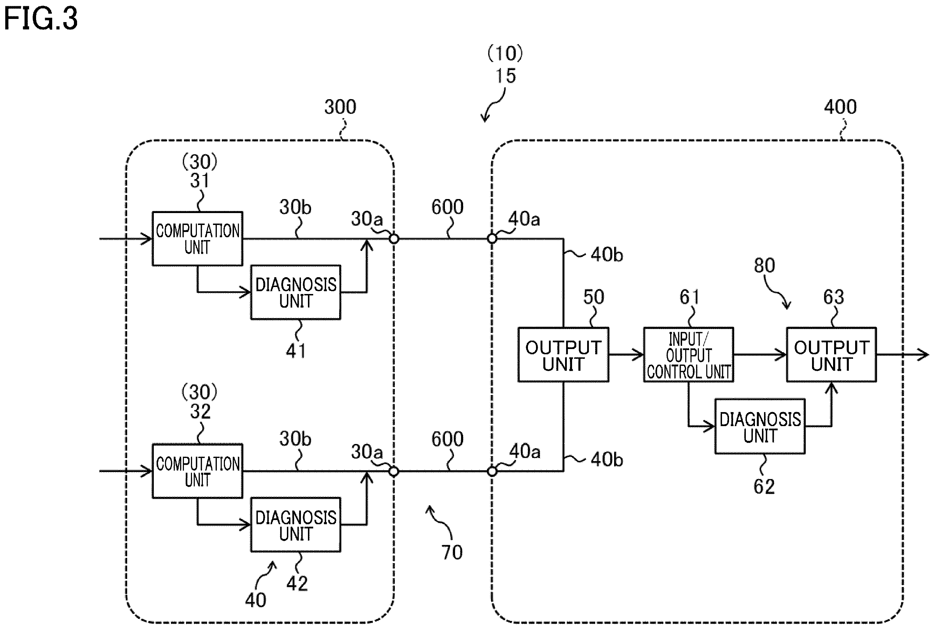

With reference to FIG. 3, the central controller 300 and the zone controllers 400 will now be described in detail. The following description is directed to a combination of the central controller 300 and one of the zone controllers 400.

### <Signal Line>

As illustrated in FIG. 3, the vehicle control system 10 includes a plurality of signal lines 600 connecting the central controller 300 (first controller) and the zone controller 400 (second controller). In this example, the computation device 15 of the vehicle control system 10 includes two signal lines 600. In addition, in this example, the signal lines 600 are communication cables of Ethernet (registered trademark).

### <Central Controller (First Controller)>

The central controller 300 supplies a plurality of first control signals to the zone controllers 400 through the signal lines 600. The central controller 300 performs abnormality diagnosis (diagnosis of whether abnormality occurs or not in this example) for each of the first control signals. In this example, the central controller 300 outputs two first control signals through two signal lines 600. In addition, in this example, diagnosis results of the first control signals obtained by the central controller 300 are transmitted to the zone controller 400 through the signal lines 600.

The first control signals are signals for controlling the actuators 100. Specifically, each of the first control signals shows a target output (e.g., target controlled variable) of a corresponding one of the actuators 100. Specific examples of the target outputs include a target driving force, a target braking force, and a target steering amount. The target outputs shown by the first control signals are of the same type, but are different from one another in at least one of information used for deriving the target outputs (e.g., information detected by the sensors 200) and content of the deriving process of the target outputs (e.g., mathematical expression). For example, one of the two first control signals shows a target steering amount derived based on a steering angle of the steering wheel of the vehicle 11 detected by the steering angle sensor 206, and the other first control signal shows a target steering amount derived based on a rotation angle of an electric motor (not shown) of an electric power steering detected by a resolver (not shown).

As illustrated in FIG. 3, the central controller 300 includes a plurality of computation units 30 and a plurality of diagnosis units 40. In this example, the central controller 300 includes two computation units 30 (specifically a first computation unit 31 and a second computation unit 32).

### <<Computation Unit>>

Each of the computation units 30 supplies a first control signal to the zone controller 400 (specifically, an output unit 50 described later). Specifically, the computation units 30 obtain target outputs of the actuators 100 based on, for example, information detected by the sensors 200, and output first control signals showing the obtained target outputs of the actuators 100.

The target outputs obtained by the computation units 30 are of the same type, but are different from one another in at least one of information used for deriving the target outputs in the corresponding computation units 30 (e.g., information detected by the sensors 200) and contents of the deriving process (e.g., mathematical expression) of the target outputs in the computation units 30. For example, the first computation unit 31 obtains a target steering amount based on information detected by the steering angle sensor 206, and the second computation unit 32 obtains a target steering amount based on information detected by the resolver (not shown).

In the central controller 300, output terminals of the computation units 30 are electrically connected to terminals of the signal lines 600 at one side. Specifically, in this example, the central controller 300 includes two connectors 30a respectively corresponding to the two computation units 30. The output terminals of the two computation units 30 are respectively electrically connected to the two connectors 30a by two internal wirings 30b. One terminal of each of the two signal lines 600 is connected to a corresponding one of the two connectors 30a. For example, each of the computation units 30 is constituted by a computation core (processor) that performs predetermined computation.

### <<Diagnosis Unit>>

The diagnosis unit 40 performs abnormality diagnosis (diagnosis of whether abnormality occurs or not in this example) in each of the computation units 30. For example, the diagnosis unit 40 determines diagnosis of whether abnormality occurs in each of the computation units 30 by a built-in self test (BIST). The diagnosis unit 40 may perform abnormality diagnoses of the computation units 30 by using other known diagnosis techniques.

In this example, the diagnosis unit 40 is constituted by two diagnosis units (a first diagnosis unit 41 and a second diagnosis unit 42) respectively corresponding to the two computation units 30. The first diagnosis unit 41 performs an abnormality diagnosis of the first computation unit 31. The second diagnosis unit 42 performs an abnormality diagnosis of the second computation unit 32. For example, each of the first diagnosis unit 41 and the second diagnosis unit 42 is constituted by a computation core (processor) for performing predetermined computation. In addition, in this example, diagnosis results of the computation units 30 obtained by the diagnosis unit 40 are transmitted to the zone controllers 400 through the signal lines 600.

### <Zone Controller (Second Controller)>

The zone controller 400 is disposed on a signal path between the central controller 300 and a corresponding one of the actuators 100. The zone controller 400 outputs a plurality of first control signals supplied from the central controller 300 through the signal lines 600, and a second control signal based on diagnosis results of the first control signals obtained by the central controller 300.

The second control signals are signals for controlling the actuators 100. Specifically, the second control signals show target outputs (e.g., target controlled variables) of the actuators 100. In this example, the target outputs shown by the second control signals are of the same type as target outputs shown by the first controllers. For example, in a case where the target outputs shown by the first controllers are target steering amounts, the target outputs shown by the second control signals are also target steering amounts.

For example, in a case where no abnormality occurs in any of the first control signals, the zone controller 400 selects a predetermined first control signal from the plurality of first control signals, and outputs the selected first control signal as a second control signal. In a case where one or more of the plurality of first control signals have abnormality but the other first control signal(s) has abnormality, the zone controller 400 selects a predetermined first control signal from the one or more first control signals having no abnormality, and outputs the selected first control signal as a second control signal. If each of the first control signals has abnormality, the zone controller 400 outputs a predetermined fixed signal (fixed value) as a second control signal.

In this example, the zone controller 400 outputs a second control signal based on two first control signals supplied from the central controller 300 through the two signal lines 600 and diagnosis results of the two first control signals obtained by the central controller 300.

As illustrated in FIG. 3, the zone controller 400 includes the output unit 50. In this example, the zone controller 400 includes an input/output control unit 61, a diagnosis unit 62, and an output unit 63, as well as the output unit 50.

### <<Output Unit>>

The output unit 50 outputs a second control signal based on first control signals supplied from the computation units 30 and diagnosis results of the computation units 30 obtained by the diagnosis unit 40.

For example, in a case where none of the computation units 30 has abnormality, the output unit 50 selects a predetermined first control signal from the plurality of first control signals, and outputs the selected first control signal as a second control signal. In a case where one or more of the computation units 30 has no abnormality but the other computation unit(s) 30 has abnormality, the output unit 50 selects a predetermined first control signal from first control signals supplied from the one or more computation units 30 having no abnormality, and outputs the selected first control signal as a second control signal. In a case where each of the computation units 30 has abnormality, the output unit 50 outputs a predetermined fixed signal (fixed value) as a second control signal.

In the zone controller 400, a plurality of input terminals of the output unit 50 are electrically connected to the other terminals of the signal lines 600. Specifically, in this example, the zone controller 400 includes two connectors 40a respectively corresponding to two input terminals of the output unit 50. The two input terminals of the output unit 50 are respectively electrically connected to the two connectors 40a by two internal wirings 40b. The other terminals of the two signal lines 600 are respectively connected to the two connectors 40a. For example, the output unit 50 is constituted by a computation core (processor) for performing predetermined computation.

In this example, the two computation units 30 (the first computation unit 31 and the second computation unit 32) and the diagnosis unit 40 in the central controller 300 and the output unit 50 in the zone controller 400 constitute a safety architecture 70 of 1-out-of-2 channel with diagnostics (1oo2D). The safety architecture 70 is fail operational (control continuation type).

### <<Input/output Controller, Diagnosis Unit, and Output Unit>>

The input/output control unit 61 performs predetermined input/output processing (e.g., protocol conversion) on the second control signal output from the output unit 50. The input/output control unit 61 supplies the second control signal subjected to the input/output processing to the output unit 50. The diagnosis unit 62 performs an abnormality diagnosis of the input/output control unit 61. Based on a diagnosis result of the input/output control unit 61 by the diagnosis unit 62, the output unit 63 is switched between a first state of outputting the second control signal supplied from the input/output control unit 61 and a second state of outputting a predetermined output signal (fixed value). Specifically, the output unit 63 is switched to the first state in a case where the input/output control unit 61 has no abnormality, and switched to the second state in a case where the input/output control unit 61 has abnormality. For example, each of the input/output control unit 61, the diagnosis unit 62, and the output unit 63 is constituted by a computation core (processor) for performing predetermined computation.

In this example, the input/output control unit 61, the diagnosis unit 62, and the output unit 63 constitute a safety architecture 80 of 1-out-of-1 channel with diagnostics (1oo1D). The safety architecture 80 is fail safe (control stop type).

### [Comparative Example]

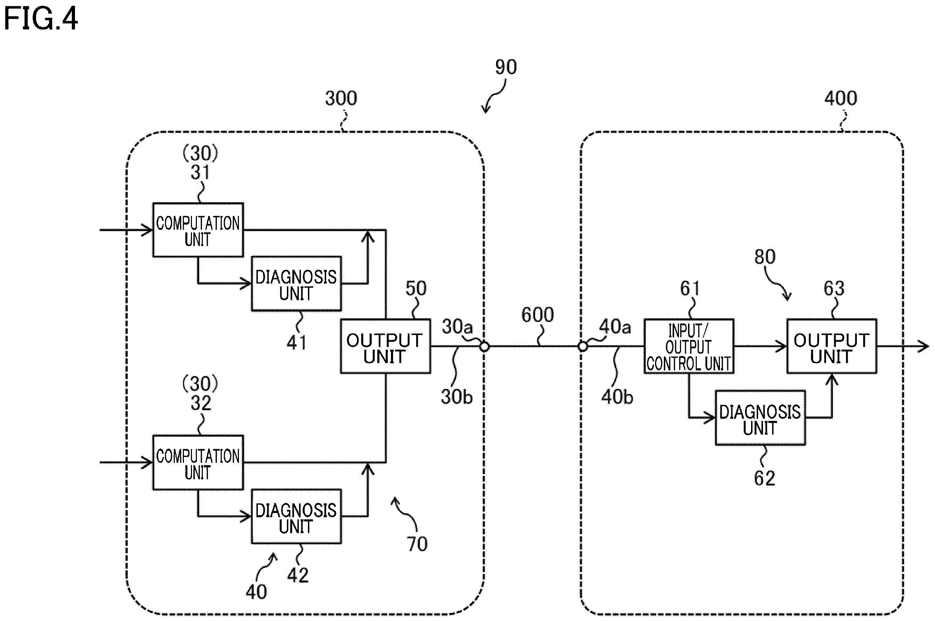

FIG. 4 illustrates an example main portion of a comparative example of the vehicle control system 10. In the following description, the comparative example of the vehicle control system 10 will be referred to as a vehicle control system 90. In the following description, components of the vehicle control system 90 will be denoted by the same reference characters as components of the vehicle control system 10 for convenience of description.

As illustrated in FIG. 4, in the vehicle control system 90, a plurality of computation units 30, a diagnosis unit 40, and an output unit 50 are disposed in a central controller 300. The central controller 300 is connected to a zone controller 400 by a single signal line 600. Specifically, in the central controller 300, an output terminal of the output unit 50 is electrically connected to a connector 30a by an internal wiring 30b. One end of the signal line 600 is connected to the connector 30a. In the zone controller 400, an input terminal of an input/output control unit 61 is electrically connected to a connector 40a by an internal wiring 40b. The other end of the signal line 600 is connected to the connector 40a.

In the vehicle control system 90 illustrated in FIG. 4, since only one signal path is provided between the central controller 300 and the zone controller 400, when a communication error (e.g., blackout) occurs in this signal path, control of the actuators 100 cannot be continued even if a plurality of control systems (specifically first control signals supplied from the computation units 30) in the central controller 300 have no abnormality. As described above, in the vehicle control system 90, it is difficult to continue the fail operational function.

### [Advantages of Embodiment]

In the vehicle control system 10 according to this embodiment, the plurality of first control signals are supplied from the central controller 300 (first controller) to each of the zone controllers 400 (second controller) through the plurality of signal lines 600, and the zone controller 400 outputs the second control signal based on the plurality of first control signals and diagnosis results (specifically diagnosis results of the plurality of computation units 30) of the first control signals. Accordingly, even if abnormality occurs in one of the first control signals (specifically one of the computation units 30), the other first control signal(s) (first control signal(s) having no abnormality) can be supplied to the zone controller 400, and thus, control of the actuator 100 can be continued. In this manner, a fail operational function can be achieved.

In the vehicle control system 10 according to this embodiment, the plurality of first control signals are supplied from the central controller 300 to the zone controller 400 through the plurality of signal lines 600 so that survivability to an error (e.g., blackout) between the central controller 300 and the zone controller 400 can be enhanced, as compared to a case where a single first control signal is supplied from the central controller 300 to the zone controller 400 through a single signal line. That is, a failure in continuing control of the actuators 100 caused by communication errors between the central controller 300 and the zone controllers 400 is less likely to occur. As a result, continuity of the fail operational function can be enhanced.

### (Variation of Embodiment)

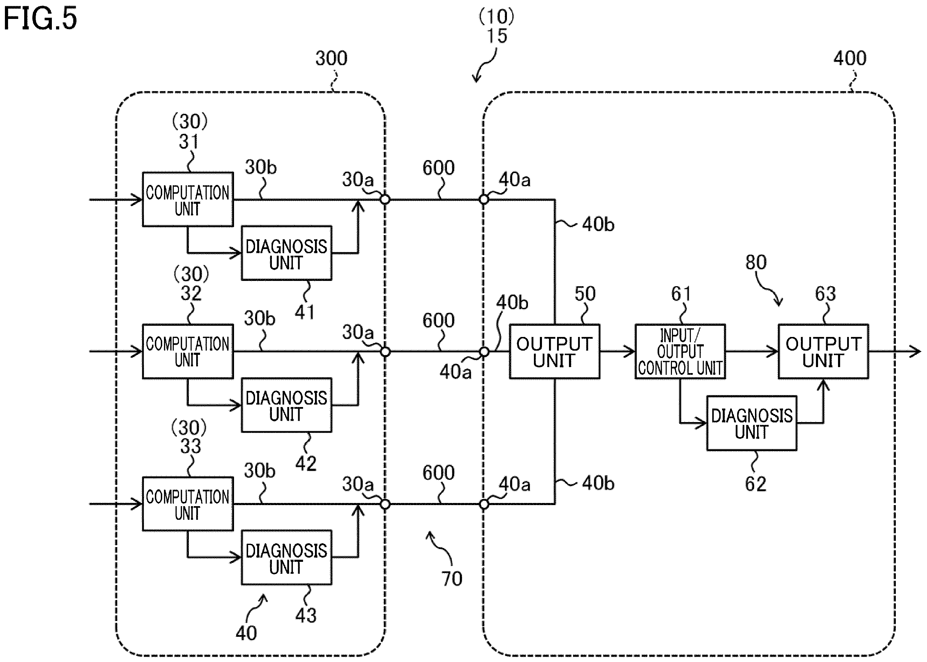

As illustrated in FIG. 5, the central controller 300 may be configured to output three first control signals. In the example of FIG. 5, the vehicle control system 10 includes three signal lines 600 connecting the central controller 300 to the zone controller 400.

In the example of FIG. 5, the central controller 300 includes three computation units 30 (specifically the first computation unit 31, the second computation unit 32, and a third computation unit 33). The diagnosis unit 40 is constituted by three diagnosis units (specifically the first diagnosis unit 41, the second diagnosis unit 42, and a third diagnosis unit 43) respectively corresponding to the three computation units 30.

In the example of FIG. 5, the zone controller 400 (specifically the output unit 50) outputs one second control signal based on three first control signals supplied from the central controller 300 through the three signal lines 600 and diagnosis results of the three first control signals (specifically the computation units 30) obtained by the central controller 300 (specifically the diagnosis unit 40).

In the example of FIG. 5, the three computation units 30 (the first computation unit 31, the second computation unit 32, and the third computation unit 33) and the diagnosis unit 40 in the central controller 300 and the output unit 50 in the zone controller 400 constitute the safety architecture 70 of 1-out-of-3 channel with diagnostics (1oo3D).

The central controller 300 may be configured to output four or more first control signals. In this case, the central controller 300 includes four or more computation units 30, and the diagnosis unit 40 may be constituted by four or more diagnosis units. The vehicle control system 10 includes four or more signal lines 600 connecting the central controller 300 to the zone controller 400, and the zone controller 400 (output unit 50) outputs one second control signal based on four or more first control signals supplied from the central controller 300 through the four or more signal lines 600 and diagnosis results of the four or more first control signals obtained by the central controller 300.

In a case where the central controller 300 is configured to output M (where M is an integer of two or more) first control signals, the zone controller 400 (the output unit 50) may be configured to output N (where N is an integer less than M) second control signal if none of the M first control signals has abnormality. For example, the M computation units 30 and the diagnosis unit 40 in the central controller 300 and the output unit 50 in the zone controller 400 may constitute the safety architecture 70 of M-out-of-N channel with diagnostics (MooND).

### (First Variation of Signal Line)

At least two of the signal lines 600 connecting the central controller 300 (the first controller) to the zone controller 400 (the second controller) preferably have different types of resistance.

As described above, since at least two of the signal lines 600 have different types of resistance, survivability to a communication error between the central controller 300 and the zone controller 400 can be enhanced, as compared to a case where all the signal lines 600 have the same type of resistance. Accordingly, continuity of the fail operational function can be enhanced.

For example, the signal lines 600 include one or more signal lines 600 having resistance (mechanical resistance) to a mechanical external force such as vibrations and impacts. If the signal lines 600 do not include a signal line 600 having resistance (electrical resistance) to an electrical external force such as noise, the electrical external force might cause communication errors in all the signal lines. On the other hand, the signal lines 600 include signal lines 600 having electrical resistance as well as signal lines 600 having mechanical resistance, electrical errors are less likely to occur in all the signal lines 600 because of an electrical external force.

### (Second Variation of Signal Line)

At least two of the signal lines 600 connecting the central controller 300 (the first controller) to the zone controller 400 (the second controller) are preferably of different types. Examples of these types of the signal lines 600 include diameters of the signal lines 600, materials for the signal lines 600, and structures of the signal lines 600.

As described above, since at least two of the signal lines 600 are of different types, the two signal lines 600 are allowed to have different types of resistance. Accordingly, survivability to a communication error between the central controller 300 and the zone controller 400 can be enhanced, as compared to the case where all the signal lines 600 have the same type of resistance. Accordingly, continuity of the fail operational function can be enhanced.

For example, in a configuration in which the diameter of one of the signal lines 600 is made larger than the diameter of the other signal line 600, mechanical resistance of the former signal line 600 is higher than mechanical resistance of the latter signal line 600. In a configuration in which the strength of the material for one of the signal lines 600 is made higher than the strength of the material for the other signal line 600, mechanical strength of the former signal line 600 is higher than mechanical resistance of the latter signal line 600. In a configuration in which the structure of one of the signal lines 600 includes a multi-layer insulation coating and the structure of the other signal line 600 includes a single-layer insulation coating, electrical resistance of the former signal line 600 is higher than electrical resistance of the latter signal line 600.

### (Third Variation of Signal Line)

At least two of the signal lines 600 connecting the central controller 300 (the first controller) to the zone controller 400 (the second controller) are preferably separated from each other.

As described above, since at least two of the signal lines 600 are separated from each other, the risk of occurrence of communication errors (especially blackout caused by disconnection) in all the signal lines 600 by an external force (especially mechanical external force) can be reduced. As a result, continuity of the fail operational function can be enhanced.

For example, one signal line 600 may reach the zone controller 400 from the central controller 300 by way of the right side of the vehicle 11 with the other signal line 600 reaching the zone controller 400 from the central controller 300 by way of the left side of the vehicle 11.

### (First Variation of Output Unit)

The output unit 50 (zone controller 400) may be configured to output, as a second control signal, a first control signal having the highest degree of reliability of first control signals (i.e., a plurality of first control signals) supplied from the computation units 30. For example, the zone controller 400 stores reliability information (information table) showing the degrees of reliability of the first control signals. Specifically, the zone controller 400 includes a storage unit (not shown) for storing reliability information. The output unit 50 (zone controller 400) selects a first control signal having the highest degree of reliability among the plurality of first control signals with reference to reliability information stored in the storage unit, and outputs the selected first control signal as a second control signal.

As described above, by outputting the first control signal having the highest degree of reliability among the first control signals supplied from the computation units 30 as the second control signal, high reliability in controlling the actuators 100 can be maintained.

The output unit 50 (the zone controller 400) may be configured such that in a case where two or more computation units 30 (first control signals) have no abnormality, the output unit 50 outputs, as a second control signal, a first control signal having the highest degree of reliability among first control signals (two or more first control signals in total) supplied from the two or more computation units 30.

The output unit 50 (the zone controller 400) may be configured to perform weighted averaging of target outputs shown by two or more first control signals having no abnormality while assigning weights to the target outputs based on the degrees of reliability of the two or more first control signals. As reliability of a first control signal increases, a weight assigned to this first control signal increases. The output unit 50 (the zone controller 400) may be configured to output a result of the weighted averaging as a second control signal.

### (Second Variation of Output Unit)

The output unit 50 (the zone controller 400) may be configured such that the output unit 50 outputs, as a second control signal, a first control signal showing the highest transfer speed among first control signals (i.e., a plurality of first control signals) supplied from the computation units 30 in a case where none of the computation units 30 (first control signals) has abnormality. For example, the zone controller 400 stores transfer speed information (information table) showing the transfer speeds of the first control signals. Specifically, the zone controller 400 includes a storage unit (not shown) for storing transfer speed information. The output unit 50 (zone controller 400) selects a first control signal having the highest transfer speed among the plurality of first control signals with reference to transfer speed information stored in the storage unit, and outputs the selected first control signal as a second control signal.

As described above, by outputting the first control signal having the highest transfer speed among the first control signals supplied from the computation units 30 as the second control signal, high responsiveness in controlling the actuators 100 can be maintained.

The output unit 50 (the zone controller 400) may be configured such that in a case where two or more computation units 30 (first control signals) have no abnormality, the output unit 50 outputs, as a second control signal, a first control signal having the highest transfer speed among first control signals (two or more first control signals in total) supplied from the two or more computation units 30.

The output unit 50 (the zone controller 400) may be configured to perform weighted averaging of target outputs shown by two or more first control signals having no abnormality while assigning weights to the target outputs in accordance with the transfer speeds of the two or more first control signals. As the transfer speed of a first control signal increases, a weight assigned to this first control signal increases. The output unit 50 (the zone controller 400) may be configured to output a result of the weighted averaging as a second control signal.

### (Third Variation of Output Unit)

The output unit 50 (the zone controller 400) may be configured to output, as a second control signal, a first control signal suitable for the scene of the vehicle 11 among first control signals (i.e., a plurality of first control signals) supplied from the computation units 30 in a case where none of the computation units 30 (first control signals) has abnormality. For example, the zone controller 400 stores scene information (information table) showing a first control signal to be selected in each scene of the vehicle 11. Specifically, the zone controller 400 includes a storage unit (not shown) for storing scene information. The output unit 50 (zone controller 400) selects a first control signal suitable for the scene of the vehicle 11 among the plurality of first control signals with reference to scene information stored in the storage unit, and outputs the selected first control signal as a second control signal.

Examples of the scene of the vehicle 11 include a scene in which the vehicle 11 travels in the daytime, a scene in which the vehicle 11 travels at night, a scene in which the vehicle 11 travels at low speed, a scene in which the vehicle 11 travels at high speed, a scene in which the vehicle 11 follows another vehicle in front, a scene in which the vehicle is put in a garage, and a combination of these scenes. These scenes can be estimated from, for example, information detected by the sensors 200 and an external environment of the vehicle 11 recognized from the information detected by the sensors 200.

As described above, by outputting the first control suitable for the scene of the vehicle 11 among the first control signals supplied from the computation units 30 as the second control signal, control of the actuators 100 can be appropriately performed depending on the scene of the vehicle 11.

### (Specific Structure of Controller)

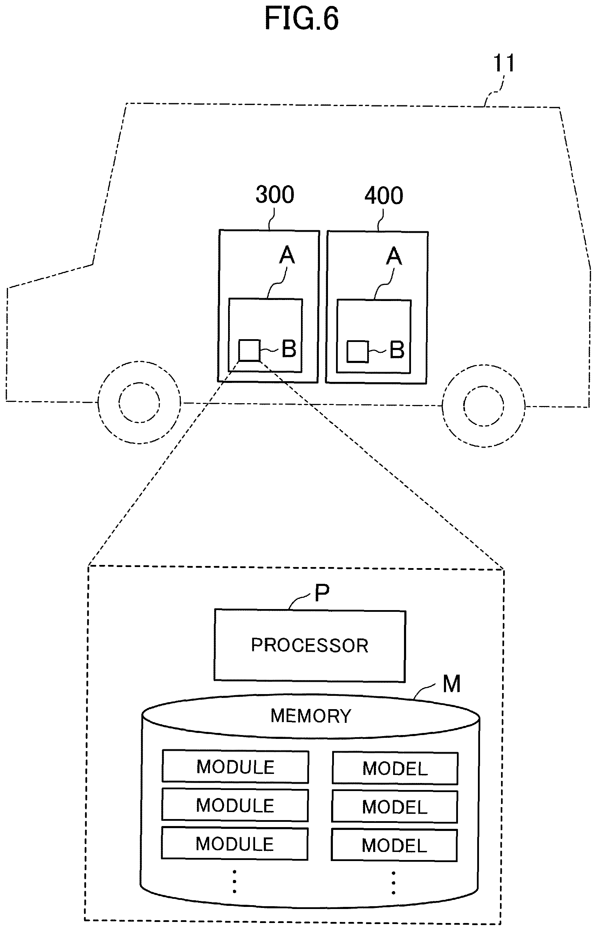

FIG. 6 illustrates an example specific configuration of the central controller 300 and the zone controller 400. The central controller 300 is constituted by an electronic control unit (ECU). The electronic control unit includes one or more chips A. Each chip A includes one or more cores B. The core B includes a processor P and a memory M. That is, the central controller 300 includes one or more processors P and one or more memories M. The memory M stores programs and information for operating the processor. Specifically, the memory M stores, for example, a module as software capable of being executed by the processor P and data showing a model to be used in processing of the processor P. Functions of units of the central controller 300 described above are implemented by execution of modules stored in the memory M by the processor P. The configuration of the zone controller 400 is similar to the configuration of the central controller 300.

### (Other Embodiments)

In the example described above, the central controller 300 (specifically the diagnosis unit 40) performs a diagnosis of abnormality on each of a plurality of first control signals (specifically the computation units 30). However, the present invention is not limited to this example. For example, the central controller 300 (the diagnosis unit 40) may be configured to perform a diagnosis of reliability (an example of abnormality level) in each of the first control signals (the computation units 30). In this case, the zone controller 400 (specifically the output unit 50) may be configured such that a first control signal (computation unit 30) diagnosed as having reliability lower than predetermined normal reliability by the diagnosis unit 40 among a plurality of first control signals (specifically computation units 30) is defined as a "first control signal (computation unit 30) having abnormality" and a first control signal (computation unit 30) diagnosed as having reliability not lower than the normal reliability by the diagnosis unit 40 is defined as a "first control signal (computation unit 30) having no abnormality."

### INDUSTRIAL APPLICABILITY

As described above, the invention disclosed here is useful as a vehicle control system.

### DESCRIPTION OF REFERENCE CHARACTERS

- 10: vehicle control system
- 11: vehicle
- 15: computation device
- 100: actuator
- 200: sensor
- 300: central controller (first controller)
- 400: zone controller (second controller)
- 30: computation unit
- 31: first computation unit
- 32: second computation unit
- 33: third computation unit
- 40: diagnosis unit
- 41: first diagnosis unit
- 42: second diagnosis unit
- 43: third diagnosis unit
- 50: output unit
- 61: input/output control unit
- 62: diagnosis unit
- 63: output unit
- 70: safety architecture
- 80: safety architecture

## Claims

1. A vehicle control system configured to control an actuator (100) in a vehicle (11), the vehicle control system comprising:
a first controller (300);
a second controller (400) disposed on a signal path between the first controller (300) and the actuator (100); and
a plurality of signal lines (600) connecting the first controller (300) and the second controller (400) to each other, wherein
the first controller (300) supplies a plurality of first control signals for controlling the actuator (100) to the second controller (400) through the plurality of signal lines (600), performs an abnormality diagnosis of each of the plurality of first control signals,
the second controller (400) outputs a second control signal for controlling the actuator (100) based on the plurality of first control signals supplied from the first controller (300) through the plurality of signal lines (600) and diagnosis results of the plurality of first control signals obtained by the first controller (300),
each of the plurality of first control signals shows a target output of the actuator (100), **characterised in that**
the target outputs shown by the plurality of first control signals are different from one another in at least one of information used for deriving the target output and content of a deriving process of the target output.

2. The vehicle control system according to claim 1, wherein
at least two of the plurality of signal lines (600) are of different types to have different types of resistance and the types include at least one of diameters of the signal lines (600), materials for the signal lines (600), and structures of insulation coatings of the signal lines (600).

3. The vehicle control system according to claim 1 or 2, wherein
at least two of the plurality of signal lines (600) are separated from each other.

## Patentansprüche

1. Fahrzeugsteuerungssystem, welches derart konfiguriert ist, dass es ein Stellglied (100) in einem Fahrzeug (11) steuert, wobei das Fahrzeugsteuerungssystem aufweist:
eine erste Steuerung (300);
eine zweite Steuerung (400), die in einem Signalweg zwischen der ersten Steuerung (300) und dem Stellglied (100) angeordnet ist; und
eine Vielzahl von Signalleitungen (600), die die erste Steuerung (300) und die zweite Steuerung (400) miteinander verbinden, wobei
die erste Steuerung (300) eine Vielzahl von ersten Steuersignalen zum Steuern des Stellglieds (100) über die Vielzahl von Signalleitungen (600) an die zweite Steuerung (400) liefert sowie eine Fehlerdiagnose jedes der Vielzahl von ersten Steuersignalen durchführt,
die zweite Steuerung (400) ein zweites Steuersignal zum Steuern des Stellglieds (100) anhand der Vielzahl von ersten Steuersignalen ausgibt, die von der ersten Steuerung (300) über die Vielzahl von Signalleitungen (600) zugeführt werden, und die von der ersten Steuerung (300) erhaltenen Diagnoseergebnisse der Vielzahl von ersten Steuersignalen ausgibt,
jedes der Vielzahl von ersten Steuersignalen eine Sollleistung des Stellglieds (100) anzeigt,
**dadurch gekennzeichnet, dass**
die von der Vielzahl von ersten Steuersignalen angezeigten Sollleistungen sich in den für das Ableiten der Sollleistung verwendeten Informationen und/oder dem Inhalt eines Ableitungsprozesses der Sollleistung voneinander unterscheiden.

2. Fahrzeugsteuerungssystem nach Anspruch 1, wobei
zumindest zwei der Vielzahl von Signalleitungen (600) von unterschiedlichen Typen sind, um unterschiedliche Widerstandstypen aufzuweisen und die Typen Durchmesser der Signalleitungen (600) und/oder Materialien für die Signalleitungen (600) und/oder Strukturen von Isolationsbeschichtungen der Signalleitungen (600) umfassen.

3. Fahrzeugsteuerungssystem nach Anspruch 1 oder 2, wobei zumindest zwei der Vielzahl von Signalleitungen (600) voneinander getrennt sind.

## Revendications

1. Système de commande de véhicule configuré pour commander un actionneur (100) dans un véhicule (11), le système de commande de véhicule comprenant :
un premier dispositif de commande (300) ;
un second dispositif de commande (400) disposé sur un trajet de signal entre le premier dispositif de commande (300) et l'actionneur (100) ; et
une pluralité de lignes de signal (600) connectant le premier dispositif de commande (300) et le second dispositif de commande (400) l'un à l'autre, dans lequel
le premier dispositif de commande (300) fournit une pluralité de premiers signaux de commande pour commander l'actionneur (100) au second dispositif de commande (400) par le biais de la pluralité de lignes de signal (600), réalise un diagnostic d'anomalie de chacun de la pluralité de premiers signaux de commande,
le second dispositif de commande (400) délivre en sortie un second signal de commande pour commander l'actionneur (100) sur la base de la pluralité de premiers signaux de commande fournis à partir du premier dispositif de commande (300) par le biais de la pluralité de lignes de signal (600) et des résultats de diagnostic de la pluralité de premiers signaux de commande obtenus par le premier dispositif de commande (300),
chacun de la pluralité de premiers signaux de commande présente une sortie cible de l'actionneur (100), **caractérisé en ce que**
les sorties cibles présentées par la pluralité de premiers signaux de commande sont différentes les unes des autres dans au moins l'une d'informations utilisées pour dériver la sortie cible et le contenu d'un processus de dérivation de la sortie cible.

2. Système de commande de véhicule selon la revendication 1, dans lequel
au moins deux de la pluralité de lignes de signal (600) sont de différents types pour présenter différents types de résistance et les types incluent au moins l'un de diamètres des lignes de signal (600), de matériaux pour les lignes de signal (600), et de structures de revêtements d'isolation des lignes de signal (600).

3. Système de commande de véhicule selon la revendication 1 ou 2, dans lequel
au moins deux de la pluralité de lignes de signal (600) sont séparées l'une de l'autre.
